# EUROPEAN PATENT SPECIFICATION

(11) **EP 0 573 908 B1**
(45) Date of publication and mention of the grant of the patent: **06.08.1997**
(21) Application number: 93108983.3
(22) Date of filing: 04.06.1993
(51) Int. Cl.: F16L 33/207

(54) **Hose connector suitable for high and very high pressures**
Schlauchpressarmatur für Hoch- und Höchstdruck
Raccord de montage de tuyaux souple supportant une pression assez ou très élevée

(30) Priority: 08.06.1992 IT MN920015 U
(43) Date of publication of application: 15.12.1993
(73) Proprietor: INTERTRACO (ITALIA) S.r.l., 46029 Suzzara (Mantova) (IT)
(72) Inventor: Bertazzoni, Stefano, I-46023 Gonzaga, Mantova (IT)
(74) Representative: Modiano, Guido, Dr.-Ing.

(56) References cited:
- EP-A- 0 073 048
- FR-A- 2 197 143
- GB-A- 2 000 840
- GB-A- 2 220 242

## Description

The present invention relates to a tube connector, in particular a hose connector for high and very high pressures.

It is known that tubes, in particular hoses for high and very high pressures, particularly used in fluid-dynamic systems, comprise two layers of rubber between which a layer made with braided or coiled steel wires is interposed; the connection of these tubes to each other or to devices of the circuit is performed by means of connectors which have various shapes and must be fixed to the end of the tubes.

Many types of connector are fixed to the end of tubes of the described type by means of a system known as "interlock", which entails, as more precisely specified hereinafter, the association of the tube to the connector after an appropriate preparation of said tube and the fixing of the tube-connector coupling by means of a metallic bush which is pressed at the peripheral region of the tube.

Connectors for tubes of the described type, to be fixed to the tubes by means of the "interlock" system have a considerable variety of constructive forms, all of which, however, are not fully satisfactory, mostly due to functional characteristics.

The preamble of claim 1 is known from FR-A-2 197 143 which describes a hose and connector assembly for high and very high pressures, the hose comprising two layers of rubber between which a layer made of braided steel is interposed, the hose being fixed onto the connector by means of pressable bush. The connector comprises a metal-on-metal connection region which has a constant diameter, is provided with an intermediate groove 41 and a rubber connection region 35 which has an equally constant smaller diameter and is provided with a series of circumferential grooves having a trapezoidal profile.

An aim of the present invention is to provide a tube connector, in particular a hose connector for high and very high pressures which can ensure perfect tightness with regard to the conveyed fluids despite a very large number of tube stress cycles.

This aim and others which will become apparent hereinafter are achieved by a hose and connector assembly for high and very high pressures, according to the invention, as defined in claim 1.

Further advantages will become apparent from the description of a tube connector, in particular a hose connector for high and very high pressures, illustrated only by way of non-limitative example in the accompanying drawings, wherein:
figure 1 is a partially sectional side view of the invention;
figure 2 is a view of the coupling of the connector according to the invention to a tube for very high pressure and to the related pressable bush;
figure 3 is a table of the dimensions (expressed in millimeters) of a series of connectors of different sizes according to the invention;
figure 3a is a side view of the connector illustrating some of the dimensional characteristics thereof as indicated in figure 3, and;
figure 3b is a fragmentary side view of the connector illustrating further dimensional characteristics thereof as indicated in figure 3.

With reference to the above figures, the reference numeral 1 generally designates the connector according to the invention, which comprises a metal-on-metal connection region, comprised between the sections 2 and 3, and a rubber connection region, comprised between the sections 4 and 5, which are radiused or blended by a frustum-shaped surface 6 which is comprised between the sections 3 and 4; the reference numeral 7 furthermore designates a seat for a circumferential raised portion which is present in the pressable bush which joins the tube and the connector.

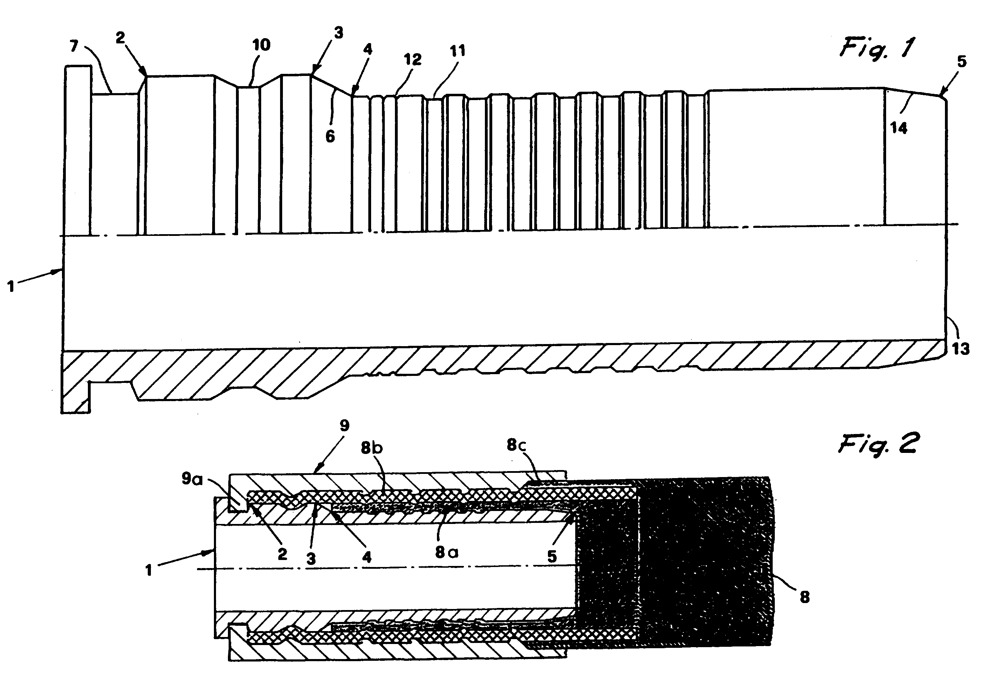

This arrangement is highlighted by figure 2 wherein the reference numeral 8 designates a tube, in particular a hose for the conveyance of oil or other fluid at very high pressure, which comprises an internal rubber layer 8a, an intermediate layer 8b made with braided or coiled metallic wire, and an external rubber layer 8c; said tube is prepared as shown in said figure 2 to be fixed on the connector 1 so as to form a fixing known as an "interlock".

It can thus be seen that the intermediate layer 8b has been exposed in order to allow it to make contact with the connector portion which is referred to herein as "metal-on-metal connection region", comprised between the sections 2 and 3, whereas the intermediate rubber layer 8a makes contact with the connector portion which is referred to herein as a "rubber connection region", comprised between the sections 4 and 5; the outer rubber layer 8a has then been cut so as to allow the steel bush 9 to make contact with the intermediate metallic layer 8b, whereas its circumferential terminal raised portion 9a enters the seat 7 to be pressed and mutually fix the tube and the connector.

An important characteristic of the invention consists of the shape of its outer surface, which is now described in detail.

First of all it should be noted that the metal-on-metal connection region, between the sections 2 and 3, and the rubber connection region, between the sections 4 and 5, both have a constant diameter, and that advantageously the ratio between these diameters varies substantially between 1.3 and 1.09 and decreases as the size of the connector increases.

The metal-on-metal connection region includes a groove 10, and advantageously the ratio between the diameter of said connection region and the diameter of the bottom of the groove is substantially comprised within an interval ranging from 1.23 to 1.05 and decreases as the size of the connector increases.

It should also be noted that the generatrices of the frustum-shaped surface 6 are advantageously inclined with respect to the normal to the axis of the connector by an angle which is substantially equal to 60°.

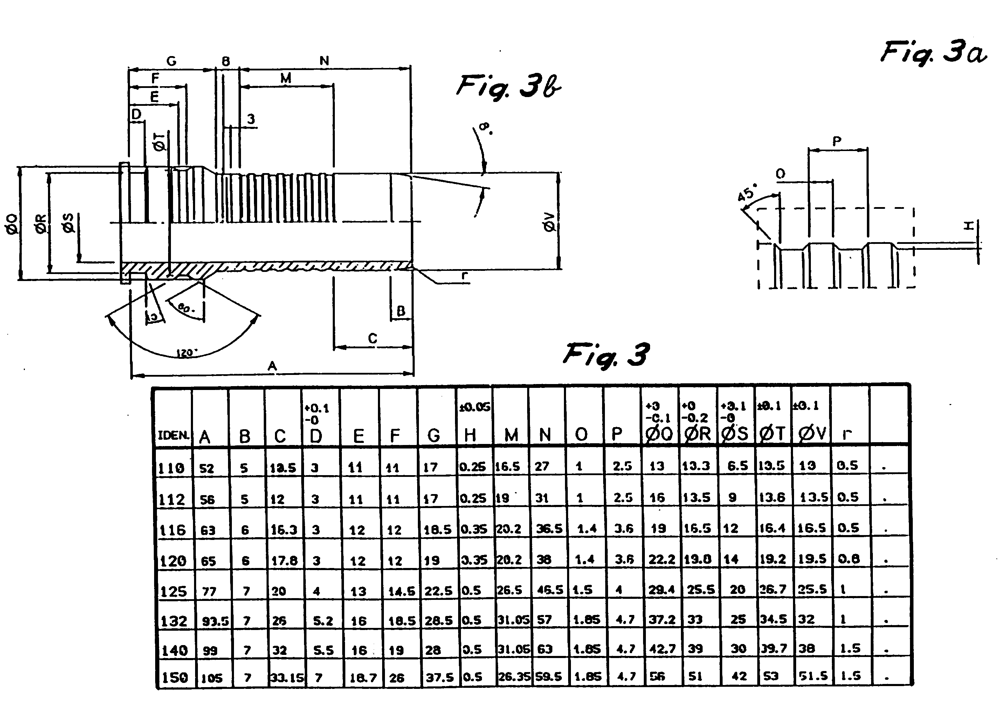

Moving on to the description of the rubber connection region comprised between the sections 4 and 5, there are provided seven circumferential grooves, such as the groove 11, which have a trapezoidal profile and advantageously have sides inclined substantially at 45°, a depth which can vary substantially between 0.25 and 0.5 mm and a pitch which can vary substantially between 2.5 and 4.7 mm, depending on the size of the connector, and increases as the size of the connector increases; the portion of the cylindrical surface of the connector which is comprised between two grooves, i.e. the dimension designated by O in figure 3, varies substantially between 1 and 1.85 mm.

The portion of cylindrical surface comprised between the section 4 and the first circumferential groove advantageously has a constant length which is substantially equal to 8 mm, and is provided with three circumferential channels, such as 12, which have a depth of substantially 0.3 mm and a pitch which is substantially equal to 1.5 mm.

Finally, at the end 13 of the connector there is a chamfer 14 which has a length which can vary substantially from 5 to 7 mm and has generatrices which are inclined by approximately 8° with respect to a plane which is parallel to the axis of the connector.

The above described configuration and the set of dimensions which can be gathered from the table of figure 3 are such as to give the connector according to the invention high functionality characteristics, with assurance of tightness to oil for hydraulic circuits at very high pressure, or to other fluids, even in the presence of a very large number of cycles of variable stress of the tube connected to said connector.

In the practical embodiment of the invention, the materials employed may be any according to requirements.

## Claims

1. Hose and connector assembly for high and very high pressures, said hose (8) comprising two layers (8a, 8c) of rubber between which a layer (8b) made of braided or coiled steel wire is interposed, said hose being fixed onto the connector (1) by means of a pressable bush (9), said connector comprising a metal-on-metal connection region which has a constant diameter and is provided with an intermediate groove (10), and a rubber connection region which has an equally constant smaller diameter and is provided with a series of circumferential grooves (11) having a trapezoidal profile, characterized in that said metal-on-metal connection region is radiused to said rubber connection region by means of a frustum-shaped surface (6).

2. Hose and connector assembly according to claim 1, characterized in that the frustum-shaped surface (6) which mutually blends the metal-on-metal connection region and the rubber connection region has generatrices inclined by an angle substantially equal to 60° with respect to the normal of the axis of the connector.

3. Hose and connector assembly according to claims 1 or 2, characterized in that a portion of the rubber connection region which runs from the frustum-shaped surface for blending with the metal-on-metal connection region up to first circumferential groove has a series of circumferential channels (12).

4. Hose and connector assembly according to one or more of the preceding claims, characterized by the presence of a chamfer (14) with generatrices inclined substantially by 8° with respect to the axis of the connector, said chamfer being located at the end of the rubber connection region.

5. Set comprising hose and connector assemblies according to any one of claims 1 to 4, characterized in that the ratio between the diameter of the metal-on-metal connection region and the diameter of the rubber connection region varies within an interval comprised substantially between 1.3 and 1.09 and decreases as the size of the connector increases.

6. Set comprising hose and connector assemblies according to claim 5, characterized in that the ratio between the diameter of the metal-on-metal connection region and the diameter of the bottom of the intermediate groove present in said region varies within an interval comprised between 1.23 and 1.05 and decreases as the size of the connector increases.

7. Set comprising hose and connector assemblies according to claims 5 or 6, characterized in that the portion of the rubber connection region which runs from the frustum-shaped region for blending with the metal-on-metal connection region up to the first circumferential groove has a constant length which is substantially equal to 8 mm for each different size of the connector, and is provided with three circumferential channels which have a depth substantially equal to 0.3 mm and a pitch substantially equal to 1.5 mm.

8. Set comprising hose and connector assemblies according to any one of the preceding claims, characterized in that the circumferential grooves are seven and have sides inclined substantially by 45°, the depth of said grooves being variable substantially from 0.25 to 0.5 mm, the pitch being variable from 2.5 to 4.7 mm, and the portion of cylindrical surface comprised between two grooves being variable from 1 to 1.85 mm and increasing as the size of the connector increases.

## Patentansprüche

1. Schlauch- und Anschlußanordnung für hohe und sehr hohe Drücke, bei der der Schlauch (8) zwei Schichten (8a, 8c) aus Gummi hat, zwischen denen eine Schicht (8b) aus geflochtenem oder gewundenem Stahldraht angeordnet ist, und der Schlauch auf dem Anschluß (1) mit einer drückbaren Hülse (9) befestigt ist, wobei der Anschluß einen Metall-Metall-Anschlußbereich mit konstantem Durchmesser und mit einer Zwischennut (10) sowie einen Gummi-Anschlußbereich mit gleichartig konstantem, kleinerem Durchmesser hat und mit einer Reihe Umfangsnuten (11) mit trapezförmigen Profil versehen ist, dadurch **gekennzeichnet,** daß der Metall-Metall-Anschlußbereich in den Gummi-Anschlußbereich über eine kegelstumpfförmige Verbindungsfläche (6) übergeht.

2. Schlauch- und Anschlußanordnung nach Anspruch 1, dadurch **gekennzeichnet,** daß die kegelstumpfförmige Verbindungsfläche (6) von Metall-Metall-Anschlußbereich und Gummi-Anschlußbereich, Erzeugende hat, die unter einem Winkel von etwa 60° gegenüber der Normalen zur Achse des Anschlusses geneigt sind.

3. Schlauch- und Anschlußanordnung nach Anspruch 1 oder 2, dadurch **gekennzeichnet,** daß ein Teil des Gummi-Anschlußbereichs, der von der kegelstumpfförmigen Verbindungsfläche mit dem Metall-Metall-Anschlußbereich bis zur ersten Umfangsnut verläuft, eine Reihe Umfangskanäle (12) hat.

4. Schlauch- und Anschlußanordnung nach einem oder mehreren der vorhergehenden Ansprüche, **gekennzeichnet** durch eine Abschrägung (14) mit unter etwa 8° gegenüber der Achse des Anschlusses geneigten Erzeugenden, die am Ende des Gummi-Anschlußbereichs angeordnet ist.

5. Satz aus Schlauch- und Anschlußanordnungen nach einem der Ansprüche 1 bis 4, dadurch **gekennzeichnet,** daß das Verhältnis des Durchmessers des Metall-Metall-Anschlußbereichs zum Durchmesser des Gummi-Anschlußbereichs im Intervall zwischen 1,3 und 1,09 veränderlich ist und mit zunehmender Größe des Anschlusses abnimmt.

6. Satz aus Schlauch- und Anschlußanordnungen nach Anspruch 5, dadurch **gekennzeichnet,** daß das Verhältnis des Durchmessers des Metall-Metall-Anschlußbereichs zum Durchmesser des Bodens der in diesem Bereich vorhandenen Zwischennut im Intervall zwischen 1,23 und 1,05 veränderlich ist und mit zunehmender Größe des Anschlusses abnimmt.

7. Satz aus Schlauch- und Anschlußanordnungen nach Anspruch 5 oder 6, dadurch **gekennzeichnet,** daß der Teil des Gummi-Anschlußbereichs, der von dem kegelstumpfförmigen Verbindungsbereich mit dem Metall-Metall-Anschlußbereich bis zu der ersten Umfangsnut verläuft, eine konstante Länge von etwa 8 mm für jede unterschiedliche Anschlußgröße hat und mit drei Umfangskanälen versehen ist, deren Tiefe etwa 0,3 mm und deren Teilungsabstand etwa 1,5 mm ist.

8. Satz aus Schlauch- und Anschlußanordnungen nach einem der vorhergehenden Ansprüche, dadurch **gekennzeichnet,** daß sieben Umfangsnuten mit unter etwa 45° geneigten Seiten und einer variablen Tiefe von 0,25 bis 0,5 mm sowie einem variablen Teilungsabstand von 2,5 bis 4,7 mm vorgesehen sind, und daß der Teil der zylindrischen Fläche zwischen zwei Nuten von 1 bis 1,85 mm variabel ist und mit zunehmender Größe des Anschlusses zunimmt.

## Revendications

1. Ensemble de tuyau et raccord pour des pressions élevées et très élevées, ledit tuyau (8) comprenant deux couches (8a,8c) en caoutchouc entre lesquelles une couche (8b) réalisée en fil d'acier tressé ou spiralé est interposée, ledit tuyau étant fixé sur le raccord (1) par l'intermédiaire d'une bague de serrage (9), ledit raccord comprenant une région de liaison métal-métal qui présente un diamètre constant et est munie d'une gorge intermédiaire (10), et une région de liaison en caoutchouc qui présente un diamètre plus petit, également constant et est munie d'une série de gorges périphériques (11) présentant un profil trapézoïdal, caractérisé en ce que ladite région de liaison métal-métal est reliée à ladite région de liaison en caoutchouc par l'intermédiaire d'une surface de forme tronconique (6).

2. Ensemble de tuyau et raccord selon la revendication 1, caractérisé en ce que la surface de forme tronconique (6) qui joint mutuellement la région de liaison métal-métal et la région de liaison en caoutchouc, présente des génératrices inclinées d'un angle sensiblement égal à 60° par rapport à la normale de l'axe du raccord.

3. Ensemble de tuyau et raccord selon les revendications 1 ou 2,
caractérisé en ce qu'une partie de la région de liaison en caoutchouc qui s'étend de la surface de forme tronconique pour joindre la région de liaison métal-métal jusqu'à la première gorge périphérique, présente une série de canaux périphériques (12).

4. Ensemble de tuyau et raccord selon l'une ou plusieurs des revendications précédentes,
caractérisé par la présence d'un chanfrein (14) ayant des génératrices inclinées sensiblement de 8° par rapport à l'axe du raccord, ledit chanfrein étant situé à l'extrémité de la région de liaison en caoutchouc.

5. Jeu comprenant des ensembles de tuyau et raccord selon l'une quelconque des revendications 1 à 4,
caractérisé en ce que le rapport entre le diamètre de la région de liaison métal-métal et le diamètre de la région de liaison en caoutchouc varie dans un intervalle compris sensiblement entre 1,3 et 1,09 et diminue quand la taille du raccord augmente.

6. Jeu comprenant des ensembles de tuyau et raccord selon la revendication 5,
caractérisé en ce que le rapport entre le diamètre de la région de liaison métal-métal et le diamètre du fond de la gorge intermédiaire présente dans ladite région, varie dans un intervalle compris entre 1,23 et 1,03 et diminue quand la taille du raccord augmente.

7. Jeu comprenant des ensembles de tuyau et raccord selon les revendications 5 ou 6,
caractérisé en ce que la partie de la région de liaison en caoutchouc qui s'étend de la région de forme tronconique pour joindre la région de liaison métal-métal jusqu'à la première gorge périphérique, présente une longueur constante qui est sensiblement égale à 8 mm pour chaque taille différente du raccord, et est munie de trois canaux périphériques qui présentent une profondeur sensiblement égale à 0,3 mm et un pas sensiblement égal à 1,5 mm.

8. Jeu comprenant des ensembles de tuyau et raccord selon l'une quelconque des revendications précédentes,
caractérisé en ce que les gorges périphériques sont au nombre de sept et ont des côtés inclinés sensiblement à 45°, la profondeur desdites gorges étant variable sensiblement de 0,25 à 0,5 mm, le pas étant variable de 2,5 à 4,7 mm, et la partie de la surface cylindrique comprise entre deux gorges étant variable de 1 à 1,85 mm et augmentant quand la taille du raccord augmente.
